(19) **Europäisches Patentamt / European Patent Office / Office européen des brevets**

(11) **EP 1 511 323 B1**

(12) **EUROPEAN PATENT SPECIFICATION**

(45) Date of publication and mention
of the grant of the patent:
**21.10.2015 Bulletin 2015/43**

(51) Int Cl.:
***H04N 19/00*** (2014.01)

(21) Application number: **04102950.5**

(22) Date of filing: **24.06.2004**

(54) **Device and method for the compression or decompression of digital images**

Gerät und Verfahren zur Kompression oder Dekompression digitaler Bilder

Dispositif et procédé de compression ou de décompression d'images numériques

(84) Designated Contracting States:
**DE ES FR GB**

(30) Priority: **03.07.2003 FR 0308115**

(43) Date of publication of application:
**02.03.2005 Bulletin 2005/09**

(73) Proprietor: **Thomson Licensing**
**92130 Issy-les-Moulineaux (FR)**

(72) Inventors:
• **Thoreau, Dominique**
**35510 CESSON-SEVIGNE (FR)**
• **Kypreos, Jean**
**35830 BETTON (FR)**
• **Kerbrat, Christine**
**35400 SAINT-MALO (FR)**

(74) Representative: **Kerber, Thierry**
**Technicolor**
**1, rue Jeanne d'Arc**
**92443 Issy-les-Moulineaux (FR)**

(56) References cited:
**US-A1- 2002 076 043**

• **ZHAO L ET AL: "MPEG-4 FGS VIDEO STREAMING WITH CONSTANT-QUALITY RATE ADAPTATION, PRIORITIZED PACKETIZATION AND DIFFERENTIATED FORWARDING" PROCEEDINGS OF THE SPIE, SPIE, BELLINGHAM, VA, US, vol. 4520, 21 August 2001 (2001-08-21), pages 84-95, XP008006103 ISSN: 0277-786X**
• **RADHA H M ET AL: "The MPEG-4 fine-grained scalable video coding method for multimedia streaming over IP" IEEE TRANSACTIONS ON MULTIMEDIA, IEEE SERVICE CENTER, PISCATAWAY, NJ, US, vol. 3, no. 1, March 2001 (2001-03), pages 53-68, XP002191171 ISSN: 1520-9210**
• **LING F ET AL: "BITPLANE CODING OF DCT COEFFICIENTS FOR IMAGE AND VIDEO COMPRESSION" PROCEEDINGS OF THE SPIE, SPIE, BELLINGHAM, VA, US, vol. 3653, no. 1-2, 1998, pages 500-508, XP000892979 ISSN: 0277-786X**
• **SCHAAR VAN DER M ET AL: "EMBEDDED DCT AND WAVELET METHODS FOR FINE GRANULAR SCALABLE VIDEO: ANALYSIS AND COMPARISON" PROCEEDINGS OF THE SPIE, SPIE, BELLINGHAM, VA, US, vol. 3974, 2000, pages 643-653, XP000981435 ISSN: 0277-786X**
• **"MPEG-4 VIDEO VERIFICATION MODEL VERSION 18.0" ISO/IEC JTC1/SC29/WG11 N3908, XX, XX, January 2001 (2001-01), pages 1-412, XP000997152**

**Description**

The invention pertains to a device and to a method for the compression or decompression of digital images, in particular within the context of the MPEG4 standard.

The compression of a digital image reduces the quantity of data necessary for, for example, its transmission via a telecommunication network such as the Internet network.

Certain compression standards, such as the MPEG4 (Motion Picture Expert Group) standard, use so-called multilayer compression such that a source image is compressed by means of a base layer, coding a so-called base image, and an enhancement layer, coding the discrepancy or the residual between the source image and the base image.

More precisely, the base layer is obtained by means of a compression method, using a given quantization stepsize QP, while the enhancement layer is obtained through a simple coding of the residual between the source image and the base image.

For example, within the context of the MPEG4 standard, it is thus known to use compression methods of the h263 or MPEG2 type and a so-called Variable Length Coding (VLC) method of coding.

Within the context of multilayer video coding, the transmission of a compressed image is done by transmitting, firstly, its base layer then, secondly, its enhancement layer, in the form of binary trains.

The binary train associated with the enhancement layer has the advantage of being able to be truncated so that, if its transmission is performed only partially subsequent to, for example, a variation of the transmission throughput in the network, the information transmitted in that part of the binary train that is correctly received can be used to enhance the image coded by the base layer.

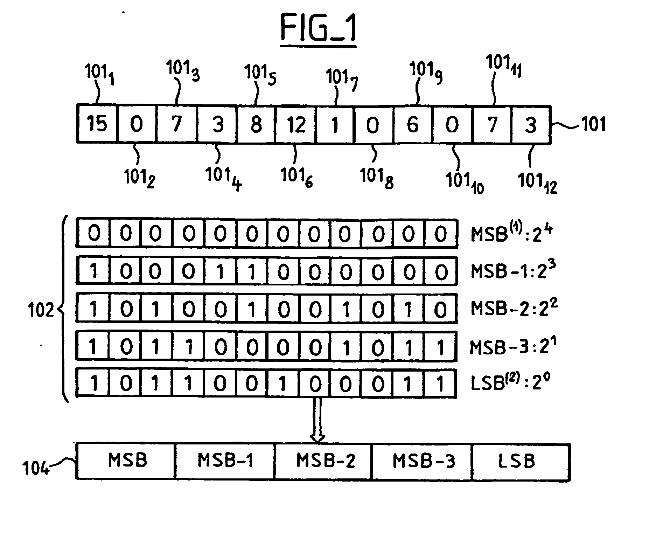

For this purpose, the residual 101 (Figure 1), coding enhancement coefficients $101_1$, $101_2$, ...$101_n$ specific to each block of pixels forming the image, is decomposed into various bit planes MSB, $MSB^{-1}$, $MSB^{-2}$, $MSB^{-3}$ and LSB ranked in priority order.

Thus, each plane MSB, $MSB^{-1}$, $MSB^{-2}$, $MSB^{-3}$ or LSB groups together bits of the same weight in the decomposition of the residual of each block (Table 102).

Subsequently, a binary train 104 is generated, successively transmitting the planes MSB, $MSB^{-1}$, $MSB^{-2}$, $MSB^{-3}$ and LSB, which may be truncated without compromising the transmission of the train as a whole. For example, if the transmission of the train 104 is disturbed during the transmission of the plane $MSB^{-3}$, the whole of the information already transmitted by the planes MSB, $MSB^{-1}$, $MSB^{-2}$ and the transmitted part of $MSB^{-3}$ will be taken into account to enhance the image.

After the receipt of the information relating to its compression, an image can be decompressed. However, during its decompression, the image may exhibit resolution anomalies characterized by the accentuation of the edges of the blocks of pixels of which the image is composed, these anomalies being due to information loss caused by high compression of the image.

To reduce these anomalies, the chrominance contrast and/or luminance contrast between the borders of the blocks of pixels of an image is reduced by means of filtering performed on the pixels of the reconstructed image. An example of filtering is described in the publication "MPEG-4 Video Verification Model", version 18.0, January 2001, pages 271 and 272.

This filtering requires the knowledge of a compression related parameter to determine whether strong compressions has been performed, in which case a considerable filtering will be applied, or whether a weak compression has been used, in which case weak filtering will be applied.

Additionally, during this operation, the intensity of the low-pass type filtering is dependent on the amplitude of vertical and horizontal gradients measured along the borders of blocks of pixels forming the image. Concerning the method described in this document, only the parameter relating to the quantization stepsize is concerned.

Thus, within the MPEG4 context, the base layer compression stepsize QP is used as quantization parameter.

The present invention results from the observation that, when an image is compressed by means of a multilayer method such as described above, no compression parameter exists making it possible to determine the intensity of the compression performed such as the quantization stepsize used for the base layer.

In fact, the filtering currently used is applied to the base layer and the compression parameter considered is the quantization stepsize used to generate this base layer.

Now, within the context of multilayer compression, this base layer quantization stepsize is no longer representative of the compression applied to an image since, as a function of the quantity of information transmitted by the enhancement layer, the image is compressed with a quantity of information that can vary for one and the same base layer quantization stepsize.

Therefore, a filtering such as defined above may not be performed at the enhancement layer level, this reducing the quality of the final image, most particularly at low and very low throughput.

The present invention remedies this drawback and makes it possible to determine a compression parameter for an image where a multilayer method is used for its compression, thereby making it possible to apply a filtering to the whole of the image - base layer and enhancement layer - to decrease the contrasts between the blocks of pixels.

More precisely, the present invention pertains to a device for the compression and/or decompression of digital images coded by means of a base layer, generated by a method of compression using a compression stepsize, and by means of an enhancement layer, generated by coding the residual existing between the compressed image and the image coded by the base layer, characterized in that it comprises means for determining a compression stepsize relating to the image coded by the base layer and by the enhancement layer, and means for instructing a filtering of this coded image as a function of this determined stepsize.

By determining a compression stepsize specific to the image coded by the base layer and by the enhancement layer, the device in accordance with the invention makes it possible to use this stepsize as quantization parameter to control the intensity of the filtering performed on the decompressed image.

In one embodiment, the device comprises means for determining the stepsize with the aid of a level allocated to each bit plane forming the enhancement layer.

According to one embodiment, the device comprises means for determining the stepsize as a function of a formula such as:

$$QP = 2^{\text{Level-x}}$$

where x is an integer value.

In one embodiment, the device comprises means for determining the stepsize as a function of a formula such as

$$Q_{dct} = \text{Min} \, (QP \, ; \text{Max} \, (2^{\text{decodedlevel} - 2} ; 1))$$

where min (a ;b) equals a if a is less than or equal to b and equals b otherwise, whereas max (a ;b) equals a if a is greater than or equal to b and equals b otherwise.

According to one embodiment, the device comprises means for processing images in MPEG format.

The invention also relates to a method for the compression or decompression of digital images coded by means of a base layer, generated by a method of compression using a compression stepsize, and by means of an enhancement layer, generated by coding the residual existing between the compressed image and the image coded by the base layer, characterized in that a compression stepsize relating to the image coded by the base layer and by the enhancement layer is determined, and in that a filtering of this coded image as a function of this determined stepsize is instructed.

According to one embodiment, the stepsize is determined by the method with the aid of a level allocated to each bit plane forming the enhancement layer.

In one embodiment, the stepsize is determined by the method as a function of a formula such as:

$QP = 2^{\text{Level-x}}$ where x is an integer value.

According to one embodiment, the stepsize is determined by the method as a function of a formula such as

$$Q_{dct} = \text{Min} \, (QP \, ; \text{Max} \, (2^{\text{decodedlevel} - 2} ; 1))$$

where min (a ;b) equals a if a is less than or equal to b and equals b otherwise, whereas max (a ;b) equals a if a is greater than or equal to b and equals b otherwise.

In one embodiment, images are processed by the method in MPEG format.

According to one embodiment, the method performs the filtering at the time of an operation of prediction between the reconstructed images, arising out of the decoding of the base layer, and of various enhancement layers.

Other characteristics and advantages of the invention will become apparent with the description of the invention given hereinbelow, by way of nonlimiting examples, while referring to the appended figures in which:

-    Figure 1, already described, represents a method for generating an enhancement layer,
-    Figures 2a and 2b represent a digital image coder and decoder in accordance with the invention, and
-    Figures 3a and 3b represent quantization stepsize evaluations determined in accordance with the invention.

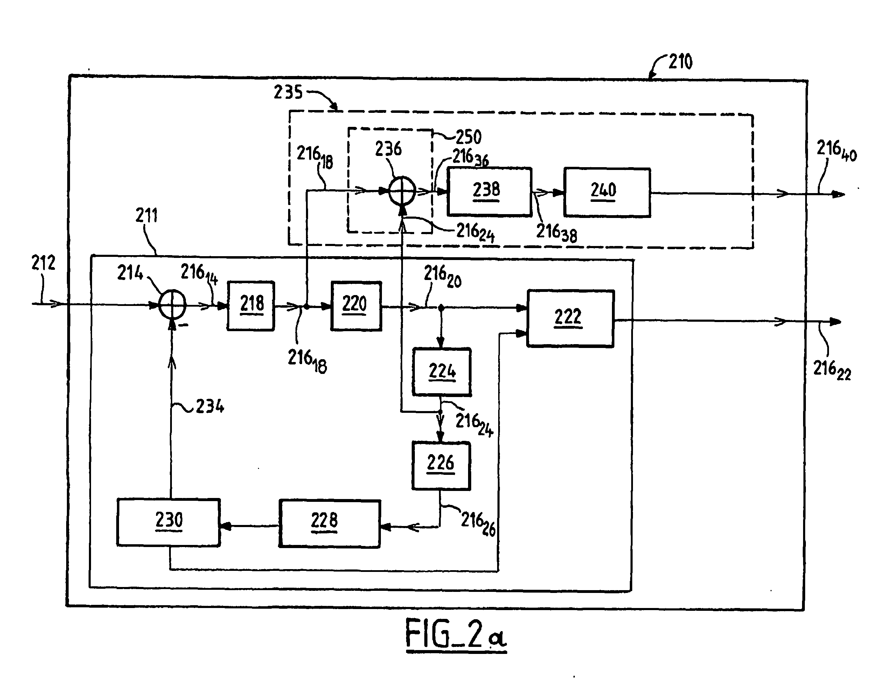

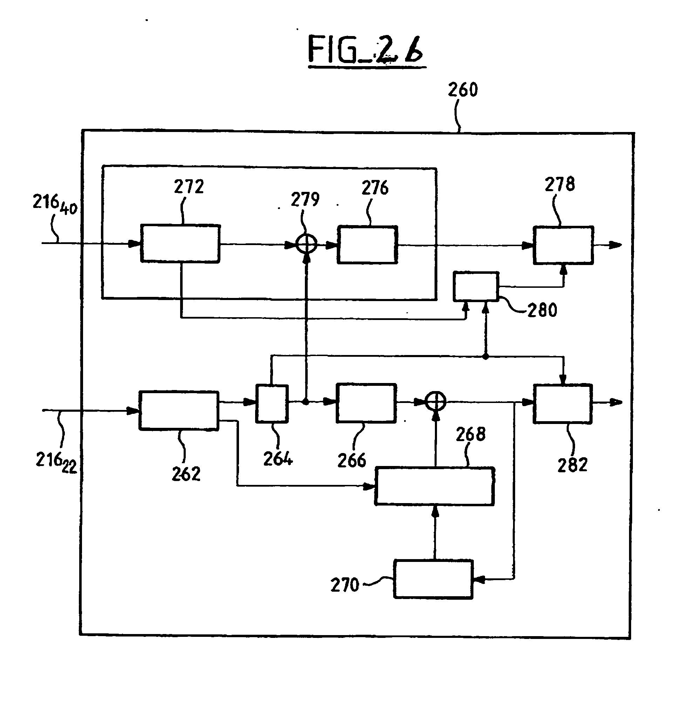

Although the invention relates mainly to a decoder, the description of the invention is given firstly via the coder 210 (Figure 2) to introduce the principle of this type of coding (in several layers).

Subsequently a decoder will be described, illustrated in Figure 2b, which complies with the invention, that is to say it can determine a quantization stepsize $Q_{det}$ relating to an image compressed by means of a base layer and of an enhancement layer for transmitting this quantization stepsize $Q_{det}$ to a decoder adapting the filtering of the image as a function of this stepsize.

The coder 210 comprises a receiver 211 receiving a signal 212, coding an image to be compressed, so as to subtract from this signal 212 information already transmitted for a previous image, within the context of the inter-image coding. This operation is performed with the aid of a subtractor 214 which receives a signal 234 corresponding to the information transmitted for the previous images.

Thus, the signal 212 is transformed into a signal $216_{14}$, which is directed to a transformer 218 which transforms the signal $216_{14}$, defined in the spatial domain, into a signal $216_{18}$ defined in the frequency domain. This operation, which is performed without loss of information, is a discrete cosine transform or DCT.

The signals $216_{18}$ are transmitted to a quantizer 220 which reduces the dynamic swing of these signals via the quantization operation. This quantization involves approximations entailing a non-negligible loss of information of the signal $216_{18}$. The information thus lost during this quantization operation is called the residual, whereas the information retained after quantization constitutes the base layer of the compressed image.

Stated otherwise, the base layer comprises the data received by the coder minus this residual, the latter being coded by the enhancement layer as described later.

On output from the quantizer 220, the signal $216_{20}$ is also transmitted to a subtraction loop which comprises an inverse quantizer 224 performing the inverse function of the quantizer 220. This inverse quantization operation is performed with no new loss of information.

One then obtains a signal $216_{24}$ which is applied to a converter 226 performing the inverse function (IDCT) to that carried out by the transformer 218, that is to say converting this signal $216_{24}$ from the frequency domain to the spatial domain, thus delivering to its output a signal $216_{26}$ which is transmitted to a memory 228 and then to a motion estimation/compensation processor 230, and finally to the subtractor 214.

The signal $216_{24}$ is also transmitted to a subtractor 236, forming part of a branch 235 for generating the enhancement layer, a second input of the subtractor 236 receiving the output signal $216_{18}$ from the DCT transformer 218 and corresponding to the source image signal after DCT.

Thus, this subtractor 236 performs the subtraction between signals representing the signals received $216_{18}$ and sent $216_{24}$ so as to obtain the residual $216_{36}$ at the output of the subtractor 236.

The branch 235 comprises a memory 238 which stores the residuals (in the spatial frequency domain) as frames and a device 240 which performs the partitioning into enhancement planes of the signal $216_{38}$ at the output of the memory 238 according to the method already described (Figure 1).

Presented in Figure 2b is a decoder 260 receiving the base layer 216, via means 262 of VLD decoding, via means 264 of inverse quantization and via means 266 of inverse DCT (IDCT).

Furthermore, within the context of inter-image coding, an image memory 270 and a motion compensator 268 are used to construct the prediction image.

Additionally, the decoder receives the enhancement layers $216_{40}$, via means 272 of VLO processing of the signal so as to reconstruct the definitive image corresponding to the addition of the enhancement layers to the base layer via the adder 274 positioned upstream of the inverse DCT dedicated to the enhancement layers.

The decoder is furnished with a post-filtering processor 278 (LPF: intended for reducing the effects of blocks) which receives the estimate $D_{det}$ determined by a quantization stepsize $Q_{det}$ estimator 280 which is associated with the image compressed as a function of the information quality transmitted by the enhancement layer.

In this Figure 2b, the output of the decoder of the base layer also comprises a post-filtering 282, the latter corresponding to the known manner of operation, aimed at reducing the effects of blocks by making direct use of the quantization stepsize dedicated to the base layer for the base layer.

In this embodiment of the invention, this quantization stepsize $Q_{det}$ varies in a manner analogous to the quantization stepsize QS of the base layer within the context of an h263 compression, a stepsize $Q_{det}$ of 1 corresponding to the smallest quantization stepsize.

To do this, a value of decoded level value lying between 1 and 5 is allocated to the bit planes MSB, MSB$^{-1}$, MSB$^{-2}$, MSB$^{-3}$ and LSB of the enhancement layer. In a general manner, 1 to n decoded levels can be considered.

| Bit plane | Weight of the bit plane | Decoded level |
|---|---|---|
| MSB | $2^4$ | 5 |
| MSB$^{-1}$ | $2^3$ | 4 |
| MSB$^{-2}$ | $2^2$ | 3 |
| MSB$^{-3}$ | $2^1$ | 2 |
| LSB | $2^0$ | 1 |

Next, the quantization stepsize $Q_{det}$ is determined by means of the following formula:

$$QP = 2^{decodedlevel - 2}$$

where "decoded level" has the value of the lowest decoded bit plane. Thus, for example, by considering the binary train of the enhancement layer to be truncated in such a way that only the planes MSB, $MSB^{-1}$ and $MSB^{-2}$ are transmitted, the quantization stepsize $Q_{det}$ equals $Q_{dét} = 2^{3-2} = 2$ (1)

This first embodiment of the invention has the advantage of being particularly simple. However, it has the drawback that the quantization stepsize $Q_{det}$ determined is independent of the base layer quantization stepsize QP, which may be troublesome if the latter varies.

This is why, according to a second embodiment, the quantization stepsize $Q_{det}$ of a compressed image is determined by means of the following formula (2):

$$Q_{det} = \text{Min}\ (QP\ ;\text{Max}\ (2^{decodedlevel - 2};1))$$

where min (a ;b) equals a if a is less than or equal to b and equals b otherwise, whereas max (a ;b) equals a if a is greater than or equal to b and equals b otherwise.

Thus, the quantization stepsize $Q_{det}$ cannot be less than 1 and, if the quantization stepsize QP of the base layer is greater than the quantization parameter which would be estimated by means of formula (1), the stepsize $Q_{det}$ determined is equal to the quantization stepsize of the base layer.

Stated otherwise, one thus prevents the quantization parameter from indicating a compression of lesser quality than that associated with the base layer alone.

Additionally, in the case where no information is transmitted by the base layer, the quantization stepsize $Q_{det}$ is equal to the maximum stepsize allowed for the base layer, indicating a weak transmission of information.

In the case of a nonlinear quantization of MPEG-2 type, a corrector coefficient Mtw can be considered in the estimation of the quantization parameter QP on account of the presence of weighting matrices, for example by means of a formula such as:

$$Q_{det} = \text{Min}(QP\ ;\text{Max}(Mtw.2^{decoded\_level - 2};1))$$

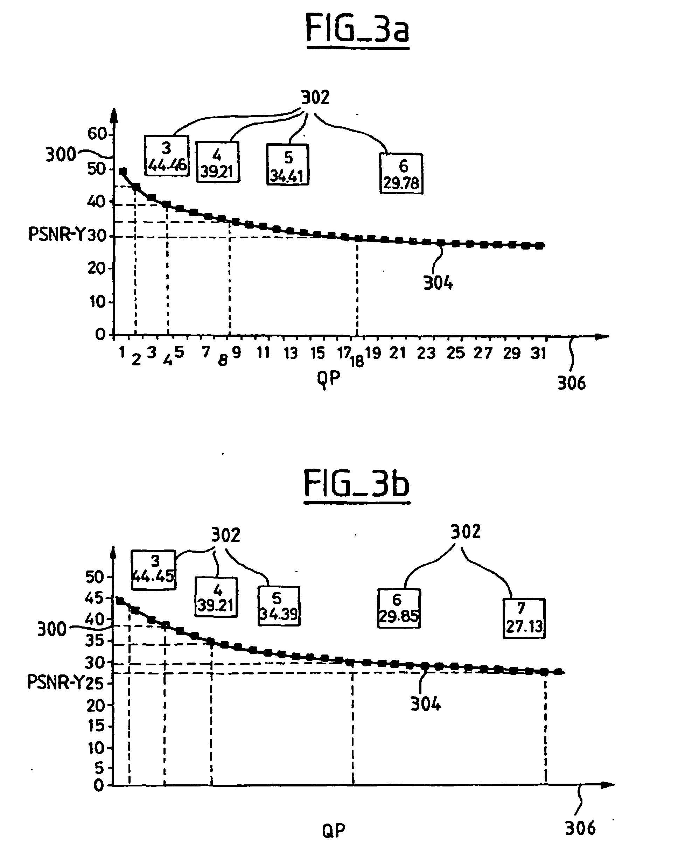

As explained hereinbelow with the aid of Figures 3a and 3b, a value of Mtw = 0.95 appears to be optimal for calculating the stepsize Qdet.

In these figures 3a and 3b are shown the estimated qualities (axis 300, in dB) of images compressed by means of a single base layer (points 302) or by means of the formulae (2) (Figure 3a) or (3) (Figure 3b) described hereinabove (curve 304).

With the aid of these Figures 3a and 3b it is observed that the quality of the images compressed by means of a single base layer, using a given quantization stepsize QP, corresponds to the quality of an image generated by means of a base layer compressed with a base layer and an enhancement layer which are such that the stepsize Qdet of this image is equal to the compression stepsize QP of a base layer.

Stated otherwise, the stepsize (Qdet) determined in accordance with the invention is representative of the quality, and hence of the compression, of the image formed by the base layer and the enhancement layer.

According to another embodiment of the invention, a method of filtering in accordance with the invention is performed at the level of the coder in the coding loop, that is to say in the inter-image prediction process (calling upon motion estimation and compensation).

Thus, the post-filtering according to the method is implemented at the time of the prediction between the reconstructed images arising out of the decoding of the base layer and of various enhancement layers.

## Claims

1. Device for the decompression (260) of digital images (212) coded by means of a base layer ($216_{22}$), generated by a method of compression using a base layer quantization stepsize, and by means of an enhancement layer ($216_{40}$) formed of bit planes, generated by coding the residual existing between the compressed image and the image coded by the base layer, **characterized in that** it comprises means (278, 280, 282) for determining a quantization stepsize as a function of a decoded level allocated to each bit plane forming the enhancement layer, where said decoded level has the value corresponding to the level of the lowest decoded bit plane and means for instructing a filtering of the decoded image as a function of said determined quantization stepsize.

2. Device according to Claim 1, **characterized in that** said means for determining the quantization stepsize further determines said quantization step size as a function of said base layer quantization step size.

3. Device according to Claim 2, **characterized in that** said means for determining the quantization stepsize determines said quantization step size $Q_{det}$ according to the following formula:

$$Q_{det} = \text{Min}\,(QP\,;\,\text{Max}\,(2^{\text{decoded level} - 2}\,;1\,)\,)$$

where QP is the base layer quantization step size, min (a ;b) equals a if a is less than or equal to b and equals b otherwise, whereas max (a ;b) equals a if a is greater than or equal to b and equals b otherwise and where decoded level has the value corresponding to the level of the lowest decoded bit plane.

4. Device according to one of the preceding claims, **characterized in that** it comprises means for processing images in MPEG format.

5. Method for the decompression of digital images coded by means of a base layer, generated by a method of compression using a base layer quantization stepsize, and by means of an enhancement layer formed of bit planes, generated by coding the residual existing between the compressed image and the image coded by the base layer, **characterized in that** a quantization stepsize relating to the image decoded is determined as a function of a decoded level allocated to each bit plane forming the enhancement layer wherein said decoded level has the value corresponding to the level of the lowest decoded bit plane, and **in that** a filtering of the decoded image as a function of said determined quantization stepsize is instructed.

6. Method according to claim 5, **characterized in that** said quantization step size is further determined as a function of said base layer quantization step size.

7. Method according to Claim 6, **characterized in that** the quantization stepsize $Q_{det}$ is determined as follows

$$Q_{det} = \text{Min}\,(QP\,;\,\text{Max}\,(2^{\text{decoded level} - 2}\,;1\,)\,)$$

where QP is the base layer quantization step size, min (a ;b) equals a if a is less than or equal to b and equals b otherwise, whereas max (a ;b) equals a if a is greater than or equal to b and equals b otherwise and where decoded level has the value corresponding to the level of the lowest decoded bit plane.

8. Method according to Claim 5 to 7, **characterized in that** images are processed in MPEG format.

9. Method according to one of Claims 5 to 8, **characterized in that**, the filtering is implemented at the time of an operation of prediction between the reconstructed images, arising out of the decoding of the base layer, and of various enhancement layers.

**Patentansprüche**

1. Vorrichtung für die Dekompression (260) digitaler Bilder (212), die mittels einer Basisschicht ($216_{22}$), die durch ein Verfahren zur Kompression unter Verwendung einer Basisschicht-Quantisierungsschrittweite erzeugt worden ist, und mittels einer Anreicherungsschicht ($216_{40}$), die durch Bitebenen gebildet ist, die durch Codieren des zwischen dem komprimierten Bild und dem durch die Basisschicht codierten Bild vorhandenen Rests erzeugt worden sind, codiert worden sind, **dadurch gekennzeichnet, dass** die Vorrichtung ein Mittel (278, 280, 282) zum Bestimmen einer Quantisierungsschrittweite als Funktion eines decodierten Pegels, der jeder Bitebene, die die Anreicherungsschicht bildet, zugeordnet ist, wobei der decodierte Pegel den Wert aufweist, der dem Pegel der niedrigsten decodierten Bitebene entspricht, und ein Mittel, um eine Filterung des decodierten Bilds als Funktion der bestimmen Quantisierungsschrittweite anzuweisen, umfasst.

2. Vorrichtung nach Anspruch 1, **dadurch gekennzeichnet, dass** das Mittel zum Bestimmen der Quantisierungsschrittweite ferner die Quantisierungsschrittweite als Funktion der Basisschicht-Quantisierungsschrittweite bestimmt.

3. Vorrichtung nach Anspruch 2, **dadurch gekennzeichnet, dass** das Mittel zum Bestimmen der Quantisierungsschrittweite die Quantisierungsschrittweite $Q_{det}$ in Übereinstimmung mit der folgenden Formel bestimmt:

$$Q_{det} = \mathrm{Min(QP;\ Max(2^{decodedlevel-2};\ 1))}$$

wobei QP die Basisschicht-Quantisierungsschrittweite ist, min(a; b) gleich a ist, falls a kleiner oder gleich b ist, und andernfalls gleich b ist, wobei max(a; b) gleich a ist, falls a größer oder gleich b ist, und andernfalls gleich b ist, und wobei der decodierte Pegel den Wert aufweist, der dem Pegel der niedrigsten decodierten Bitebene entspricht.

4. Vorrichtung nach einem der vorhergehenden Ansprüche, **dadurch gekennzeichnet, dass** sie ein Mittel zum Verarbeiten von Bildern im MPEG-Format umfasst.

5. Verfahren für die Dekompression digitaler Bilder, die mittels einer Basisschicht, die durch ein Verfahren zur Kompression unter Verwendung einer Basisschicht-Quantisierungsschrittweite erzeugt worden ist, und mittels einer Anreicherungsschicht, die durch Bitebenen gebildet ist, die durch Codieren des zwischen dem komprimierten Bild und dem durch die Basisschicht codierten Bild vorhandenen Rests erzeugt worden sind, codiert worden sind, **dadurch gekennzeichnet, dass** eine Quantisierungsschrittweite in Bezug auf das decodierte Bild als Funktion eines decodierten Pegels, der jeder Bitebene, die die Anreicherungsschicht bildet, zugeordnet ist, bestimmt wird, wobei der decodierte Pegel den Wert aufweist, der dem Pegel der niedrigsten decodierten Bitebene entspricht, und dadurch, dass eine Filterung des decodierten Bilds als Funktion der bestimmten Quantisierungsschrittweite angewiesen wird.

6. Verfahren nach Anspruch 5, **dadurch gekennzeichnet, dass** das die Quantisierungsschrittweite ferner als Funktion der Basisschicht-Quantisierungsschrittweite bestimmt wird.

7. Verfahren nach Anspruch 6, **dadurch gekennzeichnet**, wobei die Quantisierungsschrittweite $Q_{det}$ wie folgt bestimmt wird:

$$Q_{det} = \mathrm{Min(QP;\ Max(2^{decodedlevel-2};\ 1))}$$

wobei QP die Basisschicht-Quantisierungsschrittweite ist, min(a; b) gleich a ist, falls a kleiner oder gleich b ist, und andernfalls gleich b ist, wobei max(a; b) gleich a ist, falls a größer oder gleich b ist, und andernfalls gleich b ist, und wobei der decodierte Pegel den Wert aufweist, der dem Pegel der niedrigsten decodierten Bitebene entspricht.

8. Verfahren nach Anspruch 5 bis 7, **dadurch gekennzeichnet, dass** die Bilder im MPEG-Format verarbeitet werden.

9. Verfahren nach einem der Ansprüche 5 bis 8, **dadurch gekennzeichnet, dass** die Filterung zur Zeit einer Operation der Vorhersage zwischen den rekonstruierten Bildern, die aus der Decodierung der Basisschicht und verschiedener Anreicherungsschichten hervorgehen, implementiert wird.

**Revendications**

1. Dispositif pour la décompression (260) d'images numériques (212) codées au moyen d'une couche de base ($216_{22}$), générée par une méthode de compression utilisant un pas de quantification de la couche de base, et au moyen d'une couche d'amélioration ($216_{40}$) formée de plans de bits, générée par le codage du résidu existant entre l'image compressée et l'image codée par la couche de base, **caractérisé en ce qu'**il contient un moyen (278, 280, 282) permettant de déterminer un pas de quantification en fonction d'un niveau décodé alloué à chaque plan de bit formant la couche d'amélioration, où ledit niveau décodé possède la valeur correspondant au niveau du plan de bit décodé le moins élevé, et un moyen permettant de lancer le filtrage de l'image décodée en fonction dudit pas de quantification déterminé.

**2.** Dispositif selon la revendication 1, **caractérisé en ce que** ledit moyen permettant de déterminer le pas de quantification détermine ledit pas de quantification en fonction du pas de quantification de ladite couche de base.

**3.** Dispositif selon la revendication 2, **caractérisé en ce que** ledit moyen permettant de déterminer le pas de quantification détermine le pas de quantification $Q_{det}$ selon la formule suivante :

$$Q_{det} = Min\left(QP; Max\left(2^{decodedlevel - 2}; 1\right)\right)$$

où QP correspond au pas de quantification de la couche de base, où min (a;b) est égal à a si a est inférieur ou égal à b, ou est égal à b dans les autres cas, tandis que max (a;b) est égal à a si a est supérieur ou égal à b, ou est égal à b dans les autres cas, et où le niveau décodé possède la valeur correspondant au niveau du plan de bit décodé le moins élevé.

**4.** Dispositif selon l'une des revendications précédentes, **caractérisé en ce qu'**il comprend un moyen de traitement des images au format MPEG.

**5.** Procédé pour la décompression d'images numériques codées au moyen d'une couche de base, générée par une méthode de compression utilisant un pas de quantification de la couche de base, et au moyen d'une couche d'amélioration formée de plans de bits, générée par le codage du résidu existant entre l'image compressée et l'image codée par la couche de base, **caractérisé en ce qu'**un pas de quantification lié à l'image décodée est déterminé en fonction d'un niveau décodé alloué à chaque plan de bit formant la couche d'amélioration, où ledit niveau décodé possède la valeur correspondant au niveau du plan de bit décodé le moins élevé, et **en ce qu'**une instruction de filtrage de l'image décodée en fonction dudit pas de quantification déterminé est envoyée.

**6.** Procédé selon la revendication 5, **caractérisé en ce que** ledit pas de quantification est en outre déterminé en fonction dudit pas de quantification de la couche de base.

**7.** Procédé selon la revendication 6, **caractérisé en ce que** le pas de quantification $Q_{det}$ est déterminé comme suit

$$Q_{det} = Min\left(QP; Max\left(2^{decodedlevel - 2}; 1\right)\right)$$

où QP correspond au pas de quantification de la couche de base, où min(a;b) est égal à a si a est inférieur ou égal à b, ou est égal à b dans les autres cas, tandis que max (a;b) est égal à a si a est supérieur ou égal à b, ou est égal à b dans les autres cas, et où le niveau décodé possède la valeur correspondant au niveau du plan de bit décodé le moins élevé.

**8.** Procédé selon les revendications 5 à 7, **caractérisé en ce que** les images sont traitées au format MPEG.

**9.** Procédé selon l'une des revendications 5 à 8, **caractérisé en ce que** le filtrage est implémenté au moment d'une opération de prédiction entre les images reconstruites, consécutive au décodage de la couche de base et de plusieurs couches d'amélioration.

## FIG_1

FIG_2a

## FIG. 26

EP 1 511 323 B1

# FIG_3a

# FIG_3b